Europäisches Patentamt

European Patent Office

Office européen des brevets

(11) Veröffentlichungsnummer : **0 051 750
B1**

# EUROPÄISCHE PATENTSCHRIFT

(45) Veröffentlichungstag der Patentschrift :
**13.06.84**

(51) Int. Cl.³ : **B 65 G 15/34**, B 32 B 25/00

(21) Anmeldenummer : **81108019.1**

(22) Anmeldetag : **07.10.81**

(54) **Fördergurt.**

(30) Priorität : **11.11.80 DE 3042473**

(43) Veröffentlichungstag der Anmeldung :
**19.05.82 Patentblatt 82/20**

(45) Bekanntmachung des Hinweises auf die Patenterteilung : **13.06.84 Patentblatt 84/24**

(84) Benannte Vertragsstaaten :
**AT BE DE FR GB IT NL SE**

(56) Entgegenhaltungen :
**AU-B-   412 289
DE-A- 2 339 941
DE-B- 2 217 448
DE-B- 2 417 850
DE-C- 1 056 028
DE-U- 1 972 474
GB-A-   606 513
GB-A- 1 011 858
GB-A- 1 589 467
US-A- 3 537 928**

(73) Patentinhaber : **Continental Gummi-Werke Aktiengesellschaft
Königsworther Platz 1
D-3000 Hannover 1 (DE)**

(72) Erfinder : **Heynhold, Ingo, Dipl.-Ing.
Buchenhöhe 16
D-3355 Katefeld 7 (DE)**

**Beschreibung**

Die Erfindung bezieht sich auf aus Gummi oder gummiähnlichen Kunststoffen mit zwischen einer oberen und einer unteren Deckschicht eingebetteten textilen oder/und metallischen Verstärkungseinlagen hergestellte Fördergurte, insbesondere Austrags- oder Aufgabegurte.

Fördergurte werden am schwersten stets an der Aufgabestelle beansprucht, weil hier das Fördergut aus oft größerer Höhe im freien Fall auf die lasttragende Gurtoberfläche abgeworfen wird. In besonderem Maße gilt dies für die eigens als Zwischenförderer dienenden Austrag- und Aufgabegurte, da diese auch wegen ihrer verhältnismäßig kurzen Förderlänge den Aufschlagbeanspruchungen in wesentlich schnellerer Aufeinanderfolge ausgesetzt sind. Um die Aufprallenergie vor allem stückigen Fördergutes wie beispielsweise Gesteinsbrocken, Erzen, Kohle u. dgl. wenigstens teilweise zu vernichten und die Gurte gegen übermäßigen Verschleiß und örtliche Zerstörungen zu schützen, werden der Aufgabestelle vielfach Rutschen, Prall- und Gleitbleche oder Aufgabetrichter vorgeschaltet. Diese Maßnahmen lassen sich aber nicht immer anwenden, und sie gewähren auch ohnehin keinen unter allen Umständen wirksamen Schutz. Im grundsätzlichen das Gleiche gilt für eine federnd nachgiebige Unterstützung der Fördergurte im Bereich der Aufgabestelle, wozu nach bekannten Vorschlägen neben der konstruktiven Gestaltung des Traggestelles auch die Dämpfung durch elastische Tragrollen herangezogen wird. Das ebenfalls zum Stand der Technik gehörige Auflösen der Gurtoberfläche in federnde Rippen oder Stege oder in sich verformbare Blöcke ist zwar je nach der besonderen Ausführungsart in verschiedenem Umfang zum Dämpfen starker Aufprallstöße brauchbar ; es hat jedoch wiederum andere Nachteile : Für die vergleichsweise tiefreichende Oberflächenstrukturierung sind große Schichtdicken Voraussetzung ; die Fertigung ist nicht unproblematisch und erfordert zudem höheren Aufwand an Arbeit und apparativer Ausrüstung, und schließlich unterliegen die biegsamen Oberflächenelemente auch in verstärktem Ausmaße Verschleiß und Ermüdungsbrüchen.

Nach einem bekannten Vorschlag (deutsche Patentschrift 1 056 028) sind Fördergurte für keramische Massen in Längsrichtung in druckluftbeaufschlagte Hohlkammern unterteilt, wobei der Innendruck der voneinander getrennten Kammern über seitlich herausgeführte Füllventile jeweils für sich regelbar ist. Eine solche vergleichsweise aufwendige Konstruktion ermöglicht zwar eine weitgehende Anpassung der Gurtoberfläche an die Querschnittsform des plastischen Fördergutes und damit eine erwünschte Herabsetzung des Auflagerdruckes. Für Austrag- und Aufgabegurte und überhaupt zum Fördern von stückigem Gut ist sie nicht geeignet. Nach anderen bekannten Vorschlägen (z. B. deutsche Offenlegungsschrift 2 339 941) werden Fördergurte mit zwei voneinander getrennt eingebetteten Verstärkungsgeweben ausgerüstet, um sie in Querrichtung besonders biegesteif auszubilden. Eine Polsterwirkung gegen Aufprallstöße ist davon jedoch nicht zu erwarten.

Der Erfindung liegt demgegenüber als Aufgabe zugrunde, die im Innern des Gurtquerschnittes angeordneten zugfesten Armierungseinlagen in Fördergurten durch eine neuartige Gestaltung im Schichtenaufbau der Gurte selbst wirksam gegen Zerstörungen durch aufschlagendes Fördergut zu schützen, ohne andererseits die mit den bekannten Schutzmaßnahmen verbundenen Nachteile hinnehmen zu müssen. Nach der Erfindung zeichnen sich Fördergurte der eingangs geschilderten Art dadurch aus, daß zusätzlich zu den Verstärkungseinlagen und unabhängig von diesen mindestens eine der beiden Deckschichten mit einer eingebetteten Lufteinschlüsse enthaltenden elastisch verformbaren Polstereinlage versehen ist, wobei in praktischer Ausführung des Erfindungsgedankens die Polstereinlage aus einem aus durch Bindefäden auf Abstand gehaltenen Ober- und Untergewebebahnen hergestellten Verbundgewebe aufgebaut ist. Zweckmäßig ist das im wesentlichen die gesamte Gurtbreite überdeckende Verbundgewebe im Bereich der Seitenkanten der Fördergurte nach außen abgeschlossen.

Die Erfindung führt mit der Verwendung sogenannter Doppel- oder Abstandsgewebe ein neuartiges Element in den Schichtenaufbau der Fördergurte ein und macht sich die besonderen Polstereigenschaften dieser Verbundgewebe zur Erzielung überraschend vorteilhafter Wirkungen zunutze. Das in dem vollständig eingebetteten und auf allen Seiten von dem elastomeren Werkstoff der Fördergurt-Deckschicht eingeschlossenen Doppelgewebe enthaltene Luftvolumen ergibt im Verein mit der stabilisierenden Wirkung der abstandhaltenden Bindefäden einen wirksamen Puffereffekt, der auch stärkere Aufprallstöße schweren und kantigen Fördergutes so weit dämpft und abbremst, daß Durchschläge und andere örtliche Zerstörungen der Deckschicht vermieden werden. Ein sicherer Schutz der innerhalb des Gurtquerschnittes tiefer gelegenen Zugträgerelemente ist auf diese Weise in hohem Maße gewährleistet. Andererseits erfordert die vergleichsweise geringe Dicke des Doppelgewebes keine wesentliche Verstärkung der Schichtdicke des elastomeren Einbettungswerkstoffes, und schließlich ergeben sich aus dem Einbau solcher in sich zusammenhängender Verbundgewebe auch für die Herstellung der Fördergurte im Rahmen des gesamten Verfahrensablaufes keine besonderen Komplikationen.

Die erfindungsgemäßen Polstereinlagen sind zwar hinsichtlich ihrer Anordnung den bekannten Oberflächenpanzerungen schwer beanspruchter Fördergurte in Form zusätzlicher starker Gewebe- oder Drahteinlagen zu vergleichen. In ihrer Wirkung gehen sie aber über den mit diesen angestrebten bloßen Durchdringungsschutz weit hinaus, und sie bieten überdies noch den Vorteil, die Biegewilligkeit und das allgemeine Laufverhalten der Gurte nicht oder zumindest nicht wesentlich zu beeinträchtigen.

Die Erfindung ist anhand der schematischen Darstellung eines Ausführungsbeispiels in der Zeichnung verdeutlicht. Es zeigen:

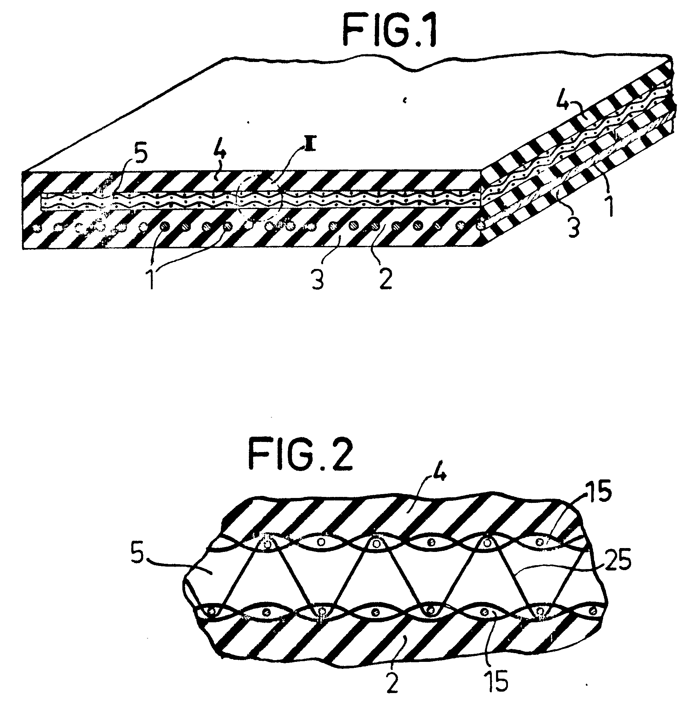

Figur 1 einen Querschnitt durch ein Teilstück eines neuartigen Fördergurtes und

Figur 2 einen Teilausschnitt aus Fig. 1 nach dem umrandeten Bereich II in vergrößertem Maßstab.

Der gezeichnete Fördergurt ist ein sogenannten Stahlseilgurt, der als einzige Festigkeitsträger in Längsrichtung mit gegenseitigen Abständen parallel zueinander durchlaufende Stahldrahtseile 1 enthält. Die Drahtseile sind in eine Kernschicht 2 eines bindefreudigen Gummis mit haftender Bindung an diese zwischen eine untere Deckschicht 3 und eine im Vergleich zu dieser dickere obere Deckschicht 4 aus jeweils einer zähharten abriebbeständigen Gummimischung eingebettet. Die Erfindung ist aber nicht auf diesen speziellen Gurttyp beschränkt, sondern mit gleicher Wirkung auch auf andere Gurtbauarten einschließlich gewebeverstärkter Fördergurte anwendbar.

Erfindungsgemäß ist oberhalb der Stahldrahtseile 1 mit Abstand von diesen ein Doppelgewebe 5 als Polstereinlage in die obere Deckschicht 4 eingebettet. Das Doppelgewebe besteht in an sich bekannter Weise aus zwei Gewebebahnen 15, die durch eingewebte oder eingeflochtene Pol- bzw. Bindefäden 25 ganzflächig untereinander verbunden und gleichzeitig parallel zueinander auf Abstand gehalten sind. Da es vollständig in die elastomere Deckschicht 4 eingebettet und auch an seinen Seitenkanten über die gesamte Gurtlänge nach außen abgeschlossen ist, wirkt es innerhalb des Gurtes als luftgefüllter Hohlkörper, der jede mechanisch hervorgerufene Eindrückung der Fördergurt-Deckschicht 4 auffängt und nach Art einer Polstereinlage dämpft.

Es liegt im Rahmen der Erfindung, eine solche aus Verbundgewebe hergestellte Polstereinlage auch in der unteren Deckschicht 3 vorzusehen, wenn dies aus den Beanspruchungen des Fördergurtes angezeigt sein sollte.

**Ansprüche**

1. Aus Gummi oder gummiähnlichen Kunststoffen mit zwischen einer oberen (4) und einer unteren Deckschicht (3) eingebetteten textilen oder/und metallischen Verstärkungseinlagen (1) hergestellter Fördergurt, insbesondere Austragoder Aufgabegurt, dadurch gekennzeichnet, daß zusätzlich zu den Verstärkungseinlagen (1) und unabhängig von diesen mindestens eine der beiden Deckschichten (3, 4) mit einer eingebetteten Lufteinschlüsse enthaltenden elastisch verformbaren Polstereinlage (5) versehen ist.

2. Fördergurt nach Anspruch 1, dadurch gekennzeichnet, daß die Polstereinlage aus einem aus durch Bindefäden (25) auf Abstand gehaltenen Ober- und Untergewebebahnen (15) hergestellten Verbundgewebe (5) aufgebaut ist.

3. Fördergurt nach Anspruch 2, dadurch gekennzeichnet, daß das im wesentlichen die gesamte Gurtbreite überdeckende Verbundgewebe (5) im Bereich der Seitenkanten des Gurtes nach außen abgeschlossen ist.

**Claims**

1. Conveyor belt formed from rubber or rubberlike plastics materials with textile and/or metallic reinforcing plies (1) embedded between an upper cover layer (4) and a lower cover layer (3), more especially a discharge or delivery belt, characterised in that, in addition to the reinforcing plies (1) and independently thereof, at least one of the two cover layers (3, 4) is provided with an embedded, resiliently deformable cushioning ply (5) containing air cavities.

2. Conveyor belt according to claim 1, characterised in that the cushioning ply is composed of a composite fabric (5) formed from upper and lower fabric webs (15) kept spaced apart by means of connecting threads (25).

3. Conveyor belt according to claim 2, characterised in that the composite fabric (5), which substantially covers the entire belt width, is sealed towards the outside in the region of the lateral edges of the belt.

**Revendications**

1. Courroie transporteuse fabriquée en caoutchouc ou en matière plastique du genre caoutchouc avec des éléments rapportés de renforcement (1) textiles et/ou métalliques qui sont noyés entre une couche supérieure de revêtement (4) et une couche inférieure de revêtement (3), courroie de déchargement ou de chargement, caractérisée en ce que, en addition aux éléments rapportés de renforcement (1) et indépendamment de celles-ci, au moins une des deux couches de revêtement (3, 4) est pourvue intérieurement d'un élément rapporté de rembourrage (5) pouvant être déformé élastiquement et contenant des inclusions d'air.

2. Courroie transporteuse selon la revendication 1, caractérisée en ce que l'élément rapporté de rembourrage est constitué d'un tissu composite fabriqué à partir de nappes supérieure et inférieure de tissu (15) maintenues à distance par des fils de liaison (25).

3. Courroie transporteuse selon la revendication 2, caractérisée en ce que le tissu composite (5) recouvrant sensiblement toute la largeur de la courroie est fermé vers l'extérieur dans la zone des bords latéraux de la courroie.

# FIG.1

# FIG.2